(19) Europäisches Patentamt
European Patent Office
Office européen des brevets

(11) **EP 3 830 053 B1**

(12) **FASCICULE DE BREVET EUROPEEN**

(45) Date de publication et mention de la délivrance du brevet:
**18.09.2024 Bulletin 2024/38**

(21) Numéro de dépôt: **19745629.6**

(22) Date de dépôt: **02.08.2019**

(51) Classification Internationale des Brevets (IPC):
**C04B 28/04** *(2006.01)* **C04B 7/12** *(2006.01)*
**C04B 14/10** *(2006.01)* **C04B 14/12** *(2006.01)*
**C04B 40/00** *(2006.01)* **C04B 103/00** *(2006.01)*

(52) Classification Coopérative des Brevets (CPC):
(C-Sets disponibles)
**C04B 14/12; C04B 7/12; C04B 14/10; C04B 28/04;**
**C04B 40/0042;** C04B 2103/0088 (Cont.)

(86) Numéro de dépôt international:
**PCT/EP2019/070860**

(87) Numéro de publication internationale:
**WO 2020/025783 (06.02.2020 Gazette 2020/06)**

(54) **UTILISATION D'UNE ARGILE POUR LA PRÉPARATION D'UN MATÉRIAU POUZZOLANIQUE**

VERWENDUNG VON TON ZUR HERSTELLUNG EINES PUZZOLANS

USE OF A CLAY FOR PRODUCING A POZZOLANIC MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.08.2018 FR 1857273**

(43) Date de publication de la demande:
**09.06.2021 Bulletin 2021/23**

(73) Titulaire: **Vicat**
**92095 Paris La Défense (FR)**

(72) Inventeurs:
• **MARTINAGE, Olivier**
**69003 LYON (FR)**
• **HUE, François**
**38300 BOURGOIN JALLIEU (FR)**

(74) Mandataire: **Germain Maureau**
**12, rue Boileau**
**69006 Lyon (FR)**

• **MERAL BUDAK ET AL: "Chemical characterization of Cretan clays for the design of restoration mortars", MIKROCHIMICA ACTA., vol. 162, no. 3-4, August 2008 (2008-08-01), AT, pages 325 - 331, XP055570392, ISSN: 0026-3672, DOI: 10.1007/s00604-007-0927-4**
• **CHANGLING HE ET AL: "Thermal stability and pozzolanic acitivity of calcined illite", APPLIED CLAY SCIENCE, ELSEVIER, AMSTERDAM, NL, vol. 9, February 1995 (1995-02-01), pages 337 - 354, XP002675982, ISSN: 0169-1317, DOI: 10.1016/0169-1317(94)00033-M**
• **FERNANDEZ R ET AL: "The origin of the pozzolanic activity of calcined clay minerals: A comparison between kaolinite, illite and montmorillonite", CEMENT AND CONCRETE RESEARCH, PERGAMON PRESS, ELMSFORD, NY, US, vol. 41, no. 1, 2011, pages 113 - 122, XP027506809, ISSN: 0008-8846, [retrieved on 20101103], DOI: 10.1016/J.CEMCONRES.2010.09.013**

(56) Documents cités:
**EP-A1- 2 253 600 EP-A1- 3 078 425**

EP 3 830 053 B1

(52) Classification Coopérative des Brevets (CPC):
(Cont.)

C-Sets
**C04B 14/10, C04B 20/06;
C04B 28/04, C04B 14/12, C04B 14/28;
C04B 40/0042, C04B 14/106, C04B 14/20,
C04B 20/04**

**Description**

La présente invention a pour objet l'utilisation d'une argile pour la préparation d'un matériau pouzzolanique.

La fabrication des liants hydrauliques, et notamment celle des ciments, consiste essentiellement en une calcination d'un mélange de matières premières judicieusement choisies et dosées, aussi désigné par le terme de « cru ». La cuisson de ce cru donne un produit intermédiaire, le clinker, qui, broyé avec d'éventuels ajouts minéraux, donnera du ciment. Le type de ciment fabriqué dépend de la nature et des proportions des matières premières ainsi que du procédé de cuisson. On distingue plusieurs types de ciments : les ciments Portland (qui représentent la très grande majorité des ciments produits dans le monde), les ciments alumineux (ou d'aluminate de calcium), les ciments prompts naturels, les ciments sulfo-alumineux, les ciments sulfo-bélitiques et d'autres variétés intermédiaires.

Les ciments les plus répandus sont les ciments de type Portland. Les ciments Portland sont obtenus à partir de clinker Portland, obtenus après clinkérisation à une température de l'ordre de 1450°C d'un cru riche en carbonate de calcium dans un four. La production d'une tonne de ciment Portland s'accompagne de l'émission de très importantes quantités de CO2 (environ 0,8 à 0,9 tonnes de CO2 par tonne de ciment dans le cas d'un CEM I).

Or, en 2014, la quantité de ciment vendu dans le monde avoisinait les 4.2 milliards de tonnes (source : Syndicat Français de l'industrie Cimentière - SFIC). Ce chiffre, en constante augmentation, a plus que doublé en 15 ans. L'industrie du ciment est donc aujourd'hui à la recherche d'une alternative valable au ciment Portland, c'est-à-dire de ciments présentant au moins les mêmes caractéristiques de résistance et de qualité que les ciments Portland, mais qui, lors de leur production, dégagent moins de $CO_2$.

Lors de la production du clinker, principal constituant du ciment Portland, le dégagement de $CO_2$ est lié :

- à hauteur de 40% au chauffage du four de cimenterie, au broyage et au transport ;
- à hauteur de 60% au $CO_2$ dit chimique, ou de décarbonatation.

La décarbonatation est une réaction chimique qui a lieu lorsque l'on chauffe du calcaire, principale matière première pour la fabrication du ciment Portland, à haute température. Le calcaire se transforme alors en chaux vive et en $CO_2$ selon la réaction chimique suivante :

$$CaCO_3 \rightarrow CaO + CO_2$$

Pour réduire les émissions de $CO_2$ liées à la production du ciment Portland, plusieurs approches ont été envisagées jusqu'à présent :

- l'adaptation ou la modernisation des procédés cimentiers afin de maximiser le rendement des échanges thermiques ;
- le développement de nouveaux liants « bas carbone » tels que les ciments sulfo-alumineux préparés à partir de matières premières moins riches en calcaire et à une température de cuisson moins élevée, ce qui permet une diminution des émissions $CO_2$ de 35% environ ;
- ou encore la substitution (partielle) du clinker dans les ciments par des matériaux permettant de limiter les émissions de $CO_2$.

Parmi les approches ci-dessus, celle de la substitution (partielle) du clinker dans les ciments a fait l'objet de nombreux développements. Deux voies ont été principalement explorées : la substitution du clinker par du filler calcaire et la substitution du clinker par des matériaux dits « pouzzolaniques »
La substitution du clinker par du filler (c'est-à-dire un matériau inactif) calcaire a essentiellement un effet de dilution et s'accompagne d'une baisse importante des résistances, ce qui est très problématique.

En revanche, la substitution du clinker par des matériaux actifs ou « pouzzolaniques » s'accompagne d'une diminution bien moindre des résistances et pour certains d'entre eux d'une augmentation de celles-ci.

Un matériau pouzzolanique désigne généralement tout matériau possédant des « propriétés pouzzolaniques », c'est-à-dire apte à se combiner à température ambiante et en présence d'eau avec la chaux ou la Portlandite formée lors de l'hydratation du ciment pour donner des hydrates très peu solubles susceptibles de générer des résistances supplémentaires à long terme.

Le ciment Portland est en effet principalement constitué de deux types de phases anhydres : les silicates de calcium ($C_3S$ et $C_2S$ - dans lesquelles C représente CaO et S représente SiOz) et les aluminates de calcium ($C_2A$ et $C_4AF$ - dans lesquelles C représente CaO, A représente $Al_2O_3$ et F représente $Fe_2O_3$). Il contient également de la chaux libre en faible quantité.

C'est l'hydratation des phases silicates qui génère les résistances grâce à la formation d'hydrates de type gel : les silicates de calcium hydratés C-S-H selon les équations suivantes (non équilibrées) :

$$C_3S + H \rightarrow C\text{-}S\text{-}H + CH$$

$$C_2S + H \rightarrow C\text{-}S\text{-}H + CH$$

dans lesquelles C représente $CaO$, S représente $SiO_2$ et H représente $H_2O$.

La portlandite « CH » est un coproduit de l'hydratation des silicates de calcium. Elle représente entre 15 et 20% en masse du ciment complètement hydraté dans le cas d'un CEM I et ne contribue pas aux résistances.

Le matériau pouzzolanique est une source de silice et/ou d'alumine amorphe et très réactive. Lorsqu'il est mélangé au ciment, il va réagir avec la portlandite pour former de nouveaux hydrates :

$$A,S + CH \rightarrow C\text{-}A\text{-}S\text{-}H$$

dans laquelle A représente $Al_2O_3$, C représente $CaO$, S représente $SiO_2$ et H représente $H_2O$.

La réaction pouzzolanique, plus lente et plus tardive, permet donc de consommer la portlandite qui n'apporte pas de résistance pour former des C-S-H secondaires ou tardifs généralement plus riches en alumine que les C-S-H issus des silicates, on les note en général C-A-S-H pour cette raison. Comme les C-S-H, les C-A-S-H sont des hydrates peu ou pas cristallisés qui viennent fermer la porosité et génèrent une augmentation des résistances à plus long terme.

A la date de la présente invention, différents matériaux pouzzolaniques sont utilisés :

- les pouzzolanes dites « naturelles » qui sont des roches volcaniques riches en silice et alumine naturellement amorphes ;
- les cendres volantes issues de la production d'électricité dans les centrales thermiques au charbon et essentiellement constituées de silice, d'alumine et d'oxyde de fer ;
- la fumée de silice provenant de la réduction du quartz par du charbon lors de la production de silicium et d'alliages fer/silicium ;
- le laitier de haut-fourneau, obtenu dans l'industrie sidérurgique lors de la production de la fonte, presqu'intégralement amorphe constitué de silice, alumine mais également calcium et oxyde de magnésium ; et
- les argiles calcinées qui sont des pouzzolanes de synthèses obtenues par la calcination à 600°C d'argiles kaoliniques.

La pouzzolanicité de ces matériaux demeure néanmoins variable, et la résistance des matériaux de construction préparés à partir des matériaux pouzzolaniques est parfois significativement inférieure à celle des matériaux de construction préparés à partir des ciments Portland classiques. Il demeure donc intéressant d'identifier de nouveaux matériaux pouzzolaniques permettant la préparation de matériaux de construction possédant une résistance à moyen et long terme comparable à celle des matériaux de construction préparés à partir des ciments Portland, tout en limitant significativement les émissions de $CO_2$ lors de leur préparation.

A la date de la présente invention, l'utilisation d'argile pour la préparation de pouzzolane de synthèse par calcination est probablement la stratégie de réduction de l'empreinte carbone des ciments et bétons ayant le plus grand potentiel. Jusqu'à présent, les argiles utilisées pour la production de matériau pouzzolanique sont des argiles dites « kaoliniques ».

La kaolinite est une argile de formule $ASH_2$ où A représente l'alumine $Al_2O_3$, S représente la silice $SiO_2$ et H représente l'eau $H_2O$. Sa structure cristallographique est organisée en feuillets de silice et d'alumine reliés entre eux par des molécules d'eau.

Lorsque la kaolinite est portée à une température de 500°C à 700°C, ses molécules d'eau sont éliminées sous forme de vapeur d'eau, ce qui entraine plusieurs conséquences en termes de structure et de réactivité, parmi lesquelles :

- disparition de l'organisation en feuillets avec pour conséquence l'introduction d'un désordre structurel (on parle d'amorphisation) ;
- augmentation très importante de la surface spécifique blaine pouvant atteindre plusieurs dizaines de fois celle d'un ciment classique ; et
- apparition d'une activité pouzzolanique induite, c'est-à-dire de la possibilité de réagir avec la portlandite formée lors de l'hydratation des $C_3S$ et $C_2S$ pour former de nouveaux hydrates tardifs.

La calcination d'argiles kaoliniques permet l'obtention d'un matériau classiquement désigné par « métakaolin ». Le métakaolin est bien connu de l'homme du métier et constitue notamment un ajout pour le béton reconnu normativement au même titre que la fumée de silice.

Dans sa publication « Options for the future of cement », The Indian Concrète Journal, Juillet 2014, Vol.88, Issue 7, pages 11 à 21, Karen L. Scrivener confirme que l'argile calcinée est un des rares matériaux pouzzolaniques présent en quantité suffisante pour faire face à la demande. L'auteur fait en outre un lien direct entre la quantité de kaolinite présente dans l'argile et la résistance en compression du matériau de construction finalement préparé. Selon les résultats présentés par l'auteur, une présence de kaolinite à hauteur de 35% à 40% dans l'argile utilisée pour préparer le matériau pouzzolanique (par calcination) apparait comme nécessaire à l'obtention d'une résistance en compression acceptable du matériau de construction finalement préparé.

De même, dans la demande de brevet EP-A-2253600 ayant pour objet une composition cimentaire comprenant un clinker Portland et un clinker de substitution lequel est formé d'un matériau carbonate et d'une argile, l'agile utilisée comme pouzzolane comprend de 40% à 45% d'illite et de 25% à 30% de kaolinite.

Dans sa publication « Investigation of the calcined kaolinite content on the hydration of Limestone Calcined Clay Cement (LC3) », Cement and Concrete Research, 2018, Vol.107, pages 124-135, F. Avet a testé des argiles de nature et de composition minéralogique très variables et conclut qu'il existe une corrélation directe entre les performances du ciment (type « LC3 » donc contenant 30% d'argile calcinée et 15% de calcaire broyé) et des teneurs élevées en kaolinite.

Dans les publications Budak et al., « Chemical characterization of Cretan clays for the design of restoration mortars », Microchimica Acta, vol. 162, no. 3-4, août 2008, pages 325-331 et Fernandez et al., « The origin of the pozzolanic activity of calcined clay minerais: A comparison between kaolinite, illite and montmorillonite », Cement & Concrète Research, vol. 41, no. 1, 2011, pages 113-122, les auteurs étudient les propriétés pouzzolaniques d'argiles contenant de la kaolinite et/ou de l'illite et concluent que seules les argiles contenant de faibles quantités de calcite et de fortes quantités de kaolinite présentent des propriétés pouzzolaniques satisfaisantes.

Cependant, l'utilisation de métakaolin pur comme matériau pouzzolanique nécessite des ajouts d'eau importants, augmentant ainsi le rapport E/C dans le matériau de construction et diminuant de fait les performances, notamment mécaniques, de celui-ci. En outre, le métakaolin ne peut être trouvé qu'en quantité limité et son prix est élevé. Il ne peut donc être ajouté que dans des quantités limitées dans les matériaux de construction, au même titre qu'un ajout de fumée de silice.

Pour viser une forte substitution des ciments, notamment Portland, par les pouzzolanes dans les matériaux de construction, et obtenir, par voie de conséquence, un impact environnemental substantiel, il est donc encore nécessaire d'identifier des matériaux susceptibles d'être utilisés pour la préparation de matériaux pouzzolaniques eux-mêmes utilisables en forte proportion dans les matériaux de construction.

Enfin, dans la publication « Thermal stability and pozzolanic acitivity of calcined illite » Applied Clay Science, vol. 9, février 1995, pages 337-354, les auteurs He et al. étudient les propriétés pouzzolaniques d'argiles contenant de l'illite et exemptes de kaolinite et concluent que seule une calcination de l'illite à 930°C permet d'obtenir un matériau possédant un caractère pouzzolanique demeurant néanmoins faible à modéré.

Or, il a maintenant été trouvé de façon tout à fait surprenante que des argiles riches en muscovite et/ou illite mais ayant des teneurs en kaolinites largement inférieures à 35% pouvaient, une fois calcinées, être utilisées comme matériau pouzzolanique dans des matériaux de construction, et ce dans des proportions importantes, allant jusqu'à 50% voire plus du matériau de construction. Les matériaux de construction ainsi préparés possèdent une résistance à long terme comparable à celle des matériaux de construction préparés à partir des ciments Portland classiques, et peuvent être préparés en limitant significativement les émissions de $CO_2$.

Ainsi, la présente invention a pour objet l'utilisation d'une argile comprenant :

- moins de 25% de kaolinite ; et
- au moins 20% de muscovite et/ou illite ;
- le rapport en poids muscovite et/ou illite / kaolinite étant supérieur à 1 ;

pour la préparation d'un matériau pouzzolanique.

Contre toute attente, les argiles ayant des teneurs en kaolinites largement inférieures à 35% mais riches en muscovite décrites ci-dessus peuvent, une fois calcinées, être utilisées comme matériau pouzzolanique dans des matériaux de construction, et ce dans des proportions allant jusqu'à 25% voire 50% du matériau de construction. Les matériaux de construction ainsi préparés possèdent une résistance à long terme comparable à celle des matériaux de construction préparés à partir des ciments Portland classiques, et peuvent être préparés en limitant significativement les émissions de $CO_2$.

Dans le cadre de la présente invention :

- on entend par « argile » toute matière naturelle riche en alumine et en silice, essentiellement constituée de silicates et de phylosilicates ;
- on entend par « muscovite » le minéral de la famille des phylosilicates de formule $KAl_2(AlSi_3O_{10})(OH,F)_2$ ;
- on entend par « illite » le minéral de la famille des phylosilicates de formule $(K,H_3O)(Al,Mg,Fe)_2(Si,Al)_4O_{10}[(OH)_2,(H_2O)]$ ;
- on entend par « kaolinite » le minéral de la famille des phylosilicates de formule $Al_2Si_2O_5(OH)_4$ ;

- on entend par « calcite » un polymorphe du carbonate de calcium $CaCO_3$ ;
- on entend par « dolomite » le carbonate de magnésium $MgCO_3$ ;
- on entend par « microdine » le minéral de la famille des tectosilicates de formule $KAlSi_3O_8$ ;
- on entend par « hématite » l'oxyde de fer (III) $Fe_2O_3$ ;
- on entend par « phase amorphe » la fraction non ou mal diffractante du matériau. En diffraction des rayons X, seules les espèces diffractantes peuvent être identifiées et quantifiées via la méthode de Rietveld. La comparaison de cette quantification et de la chimie correspondante avec la chimie réelle du matériau permet de quantifier la fraction non diffractante du matériau par « différence » en utilisant la méthode des standards internes ou externes ;
- on entend par « matériau pouzzolanique » tout matériau possédant des propriétés pouzzolaniques au sens de la norme européenne NF EN 197-1, c'est-à-dire apte à se combiner à température ambiante et en présence d'eau avec la chaux ou la Portlandite formée lors de l'hydratation du ciment pour donner des hydrates très peu solubles susceptibles de générer des résistances supplémentaires à long terme ; et
- on entend par « matériau de construction » un ciment, un béton, un mortier.

Dans le cadre de la présente invention, le diamètre médian ou d50 correspond au diamètre en-dessous duquel se trouve 50% de la masse totale des particules de l'échantillon considéré. Celui-ci peut être déterminé par toute méthode connue de l'homme du métier, notamment par granulométrie laser en voie sèche ou humide.

Enfin, dans le cadre de la présente invention, les proportions exprimées en % correspondent à des pourcentages massiques par rapport au poids total de l'entité considérée.

La présente invention a donc pour objet l'utilisation d'une argile possédant les caractéristiques minéralogiques décrites ci-avant pour la préparation d'un matériau pouzzolanique. De préférence, la présente invention a pour objet l'utilisation d'une argile telle que définie précédemment pour la préparation d'un matériau pouzzolanique, ladite argile possédant les caractéristiques suivantes, choisies seules ou en combinaison :

- l'argile contient moins de 22% de kaolinite, de préférence moins de 20% de kaolinite, de préférence encore moins de 18% de kaolinite, de façon tout à fait préférée moins de 15% de kaolinite ;
- l'argile contient au moins 1% de kaolinite ;
- l'argile contient au moins de 25% de muscovite et/ou illite, de préférence encore de 25% à 50% de muscovite et/ou illite, de façon tout à fait préférée de 25% à 40% de muscovite et/ou illite ;
- le rapport en poids muscovite et/ou illite / kaolinite dans l'argile utilisée est supérieur à 1, de façon tout à fait préférée supérieur à 2 ;
- l'argile contient en outre au moins 1% de calcite, de préférence au moins 2% de calcite, de façon tout à fait préférée de 3% à 5% de calcite ;
- l'argile contient en outre une phase amorphe contenant de la silice, de l'alumine et/ou du calcium. De préférence, l'argile contient de 20% à 50% de ladite phase amorphe. De préférence encore, l'argile contient de 30% à 40% de ladite phase amorphe ;
- l'argile contient en outre de la chlorite, du quartz, de la dolomite, de la microcline, de l'hématite et/ou de la smectite ; et/ou
- l'argile contient moins de 25% de smectite, de préférence moins de 20% de smectite.

L'argile décrite ci-avant peut donc être utilisée pour préparer un matériau pouzzolanique par calcination. Ainsi, la présente invention a également pour objet un procédé de préparation d'un matériau pouzzolanique à partir de l'argile décrite précédemment, ledit procédé comprenant les étapes suivantes :

- éventuel séchage puis éventuel broyage de l'argile ;
- calcination du matériau obtenu à une température comprise entre 650°C et 900°C ; et
- éventuelle désagglomération de l'argile calcinée obtenue, par exemple par broyage, jusqu'à atteindre un diamètre médian de 10 $\mu$m à 20 $\mu$m.

Lors de l'éventuel broyage de l'argile avant calcination, celui-ci est effectué de préférence en vue d'obtenir une poudre de 100% de passant à 2 mm.

L'étape de calcination peut être conduite à l'aide d'un calcinateur rotatif, au sein duquel celle-ci dure environ 30 à 90 minutes. Cependant, un « calcinateur flash » peut également être utilisé pour calciner l'argile en vue d'obtenir un matériau pouzzolanique, auquel cas l'étape de calcination est très brève (1 à 2 secondes, voire moins). Le fait qu'un calcinateur flash puisse être utilisé permet de réduire considérablement l'énergie nécessaire à la calcination et à la préparation du matériau pouzzolanique.

Lors de l'éventuel broyage de l'argile calcinée, celui-ci est effectué jusqu'à atteindre un diamètre médian inférieur ou égal à 25 $\mu$m, de préférence encore inférieur ou égal à 20 $\mu$m, de façon tout à fait préférée inférieur ou égal à 15 $\mu$m.

La présente invention peut être illustrée de façon non limitative par les exemples suivants.

## Exemple 1 - Calcination de l'argile

1.1 - Composition de l'argile

Une argile brute possédant la composition minéralogique rapportée dans le Tableau 1 suivant est utilisée.

*Tableau 1 - Composition minéralogique de l'argile avant calcination*

| Catégorie | Phase | % (p/p) |
|-----------|-------|---------|
| Argiles | Muscovite/Illite | 39.8 |
| | Kaolinite | 14.9 |
| | Chlorite | 5.6 |
| | Smectite | 7.9 |
| Carbonates | Calcite | 4.1 |
| | Dolomite | 5.4 |
| Autres | Quartz | 12.2 |
| | Hématite | 1 |
| | Albite | 0.4 |
| | Anatase | 2.1 |
| | Microcline | 2.3 |
| Amorphes | | 4.3 |

L'argile ci-dessus possède la composition chimique (en % (p/p)) rapportée dans le Tableau 2 suivant.

*Tableau 2 - Composition chimique de l'argile avant calcination*

| $SiO_2$ | $Al_2O_3$ | $Fe_2O_3$ | CaO | MgO | $SO_3$ | $K_2O$ | $Na_2O$ | SrO | $TiO_2$ | $P_2O_5$ | MnO | Perte au feu |
|------|-------|-------|-----|-----|-----|------|------|-----|------|------|-----|--------------|
| 47.79 | 20.94 | 6.16 | 4.24 | 2.90 | 0.08 | 2.75 | 0.26 | 0.02 | 0.99 | 0.08 | 0.04 | 13.83 |

L'argile utilisée présente en outre les caractéristiques physiques rapportées dans le Tableau 3 suivant.

*Tableau 3 - Caractéristiques physiques de l'argile avant calcination*

| Masse volumique (en $g/cm^3$) | | 2.6 |
|-------------------------------|---|-----|
| Surface spécifique | Blaine (en $cm^2/g$) | 2300 |
| | BET (en $m^2/g$) | 43.9 |

1.2 - Calcination de l'argile

*1.2.1 - En four de laboratoire*

L'argile décrite ci-dessus est séchée durant 12 heures à 105°C puis broyée au broyeur à anneau jusqu'à un diamètre médian de 30 à 40 $\mu$m. La poudre ainsi préparée est cuite en four de laboratoire par lots de 200 g à 800°C durant 1h00 avec enfournement et défournement à chaud. L'argile calcinée ainsi obtenue (argile calcinée AC-1) est ensuite à nouveau broyée légèrement au broyeur planétaire (15 secondes, 700 tr/min) pour la désagglomérer et obtenir un diamètre médian de 20 $\mu$m.

*1.2.2 - En calcinateur flash*

L'argile décrite ci-dessus est séchée durant 72 heures à 105°C puis concassée au concasseur à mâchoires jusqu'à obtention de 100% de passant à 2 mm. La poudre ainsi préparée est ensuite calcinée dans un calcinateur flash à 625°C (argile calcinée ACF-1), 780°C (argile calcinée ACF-2), 870°C (argile calcinée ACF-3) ou 875°C sous atmosphère réductrice (argile calcinée ACF-4) avec un temps de séjour moyen de 1 à 2 secondes. L'argile calcinée ainsi obtenue est ensuite à nouveau broyée au broyeur vertical pour la désagglomérer et obtenir un diamètre médian de 10-11 $\mu$m.
Les argiles calcinées ainsi obtenues sont analysées. La composition minéralogique (en % (p/p)) de celles-ci est rapportée dans le tableau 4 suivant.

*Tableau 4 - Composition minéralogique des argiles calcinées ACF-1 à ACF-4*

| Catégorie | Phase | ACF-1 | ACF-2 | ACF-3 | ACF-4 |
|---|---|---|---|---|---|
| **Argiles** | Muscovite/Illite | 26.4 | 24.8 | 17.6 | 17.2 |
| | Kaolinite | 5.8 | 2.5 | - | - |
| | Chlorite | 3.1 | - | - | - |
| **Carbonates** | Calcite | 3.3 | 3 | 1.7 | 2.1 |
| | Dolomite | 1.1 | 0.2 | - | - |
| **Autres** | Quartz | 10.7 | 11.8 | 12.1 | 11.9 |
| | Hématite | 1.7 | 1.8 | 1.9 | 1.6 |
| | Microcline | 4.2 | 3.5 | 2.3 | 2.3 |
| | Chaux libre | - | 0.5 | 0.5 | 0.4 |
| | Périclase | - | 0.5 | 0.4 | 0.4 |
| **Amorphes** | | 43.8 | 51.3 | 63.4 | 64 |

## Exemple 2 - Compositions de mortier

*Préparation des mortiers 1 à 16*

Un mortier de référence (ci-après Mortier 1) est préparé à partir d'un ciment Portland CEM I 52.5 R selon la norme EN 196-1. La composition du mortier 1 est la suivante :

- 450g de ciment CEM I 52.5 R ;
- 1350g de sable normalisé ; et
- 225g d'eau.

De manière similaire, les mortiers 2 à 15 sont respectivement préparés à partir d'un mélange:

- 90% de CEM I 52.5 R / 10% de AC-1 (mortier 2) ;
- 80% de CEM I 52.5 R / 20% de AC-1 (mortier 3) ;
- 70% de CEM I 52.5 R / 30% de AC-1 (mortier 4) ;
- 60% de CEM I 52.5 R / 40% de AC-1 (mortier 5) ;
- 83% de CEM I 52.5 R / 17% de AC-1 (mortier 6) ;
- 83% de CEM I 52.5 R / (8.5% de AC-1 et 8.5% de filler calcaire) (mortier 7) ;
- 83% de CEM I 52.5 R / 17% de filler calcaire (mortier 8) ;
- 75% de CEM I 52.5 R / 25% de AC-1 (mortier 9) ;
- 75% de CEM I 52.5 R / 25% de filler calcaire (mortier 10) ;
- 50% de CEM I 52.5 R / 50% de AC-1 (mortier 11) ;
- 50% de CEM I 52.5 R / (33% de AC-1 et 17% de filler calcaire) (mortier 12) ;
- 50% de CEM I 52.5 R / (25% de AC-1 et 25% de filler calcaire) (mortier 13) ;
- 50% de CEM I 52.5 R / (17% de AC-1 et 33% de filler calcaire) (mortier 14) ; et
- 50% de CEM I 52.5 R / 50% de filler calcaire (mortier 15) ;

les autres ingrédients et leurs proportions restant inchangés.

Enfin, le mortier 16 est préparé à partir d'un mélange 75% de CEM I 52.5 R / 25% d'argile calcinée commerciale (Argicem®), les autres ingrédients et leurs proportions restant inchangés.

*Résistance mécanique*

La résistance mécanique des mortiers est mesurée conformément à la norme EN 196-1 sur des éprouvettes de mortiers prismatiques 4x4x16 cm3 préparés à 20°C.

L'indice de performance caractérise la performance du matériau pouzzolanique lorsqu'il est utilisé à x% de substitution. Il est défini comme le rapport des résistances à la compression (mesurées comme indiqué ci-dessus) d'un mortier de ciment constitué de 100-x% d'un ciment référence (CEM I) et x% de l'ajout pouzzolanique considéré, et d'un mortier préparé avec 100% de ciment référence.

$$IP\ (\%) = \frac{RC\ ciment\ substitué\ à\ x\%}{RC\ Référence}$$

Les résultats des mesures de la résistance en compression (Rc) sont rapportés dans les tableaux 5 et 6 suivants.

| | | Mortier 1 (réf.) | Mortier 2 | Mortier 3 | Mortier 4 | Mortier 5 | Mortier 6 | Mortier 7 | Mortier 8 |
|---|---|---|---|---|---|---|---|---|---|
| **Résistance à la compression (MPa)** | **2 jours** | 46.6 | 42.5 | 36.5 | 32.6 | 27.8 | 38.7 | 39.5 | 40.1 |
| | **7 jours** | 55.9 | 51.6 | 46.2 | 42.7 | 38.0 | 50.1 | 52.4 | 49.1 |
| | **28 jours** | 60.5 | 57.6 | 56.6 | 51.2 | 46.4 | 58.0 | 59.1 | 57.6 |
| **Indice de performance (en %)** | **2 jours** | - | 91.3 | 78.3 | 69.9 | 59.8 | 83.0 | 84.8 | 86.1 |
| | **7 jours** | - | 92.3 | 82.6 | 76.3 | 67.9 | 89.6 | 93.7 | 87.8 |
| | **28 jours** | - | 95.2 | 93.6 | 84.6 | 76.7 | 95.9 | 97.7 | 95.2 |

*Tableau 5 – Résistances en compression*

| | | Mortier 9 | Mortier 10 | Mortier 11 | Mortier 12 | Mortier 13 | Mortier 14 | Mortier 15 | Mortier 16 |
|---|---|---|---|---|---|---|---|---|---|
| **Résistance à la compression (MPa)** | **2 jours** | 34.6 | 35.8 | 21.1 | 22.4 | 22.3 | 21.0 | 19.4 | 31.5 |
| | **7 jours** | 44.7 | 45.0 | 32.7 | 36.1 | 33.6 | 31.3 | 25.4 | 45.9 |
| | **28 jours** | 54.6 | 50.4 | 40.0 | 41.1 | 39.5 | 36.9 | 27.8 | 54.6 |
| **Indice de performance (en %)** | **2 jours** | 74.2 | 76.8 | 45.3 | 48.1 | 47.9 | 45.1 | 41.6 | 67.6 |
| | **7 jours** | 80.0 | 80.5 | 58.5 | 64.6 | 60.1 | 56.0 | 45.4 | 82.1 |
| | **28 jours** | 90.2 | 83.3 | 66.1 | 67.9 | 65.3 | 61.0 | 46.0 | 90.2 |

*Tableau 6 – Résistances en compression*

Il apparait que les mortiers préparés à partir d'un mélange binaire ciment Portland/argile calcinée en four de laboratoire (mortiers 2 à 6, 9 et 11) possèdent une résistance mécanique à 28 jours comparable à celle du mortier préparé à partir du seul ciment Portland (mortier 1) et comparable voire supérieure à celle du mortier préparé à partir d'un mélange ciment Portland/argile calcinée commerciale jusqu'à 25% de substitution.

Au-delà, il semble que l'ajout d'argile calcinée en four de laboratoire ait un effet de dilution faisant baisser la résistance mécanique à 28 jours.

Les résultats obtenus pour les mortiers préparés à partir d'un mélange binaire ciment Portland/filler calcaire (mortiers 8, 10 et 15) ou à partir d'un mélange ternaire ciment Portland/(argile calcinée en four de laboratoire + filler calcaire) (mortiers 7 et 12 à 14) mettent en avant l'influence positive de la présence de l'argile calcinée sur la résistance mécanique à 28 jours, notamment aux taux de substitution les plus élevés.

**Exemple 3 - Compositions de mortier**

*Préparation des mortiers 17 à 21*

Comme dans l'exemple 2, les mortiers 17 à 21 sont préparés à partir d'un mélange CEM I 52.5 R/argile dans les proportions suivantes :

- 75% de CEM I 52.5 R / 25% de ACF-1 (mortier 17) ;
- 75% de CEM I 52.5 R / 25% de ACF-2 (mortier 18) ;
- 75% de CEM I 52.5 R / 25% de ACF-3 (mortier 19) ;
- 75% de CEM I 52.5 R / 25% de ACF-4 (mortier 20) ; et
- 55% de CEM I 52.5 R / (30% de ACF-4 et 15% de filler calcaire) (mortier 21) ;

les autres ingrédients et leurs proportions restant inchangés.

*Résistance mécanique*

La résistance mécanique des mortiers est mesurée sur des éprouvettes de mortiers prismatiques $4 \times 4 \times 16$ cm3 préparés à 20°C selon la norme EN 196-1.

L'indice de performance caractérise la performance du matériau pouzzolanique lorsqu'il est utilisé à x% de substitution. Il est défini comme le rapport des résistances à la compression (mesurées comme indiqué ci-dessus) d'un mortier de ciment constitué de 100-x% d'un ciment référence (CEM I) et x% de l'ajout pouzzolanique considéré, et d'un mortier préparé avec 100% de ciment référence.

$$IP\ (\%) = \frac{RC\ ciment\ substitué\ à\ x\%}{RC\ Référence}$$

Les résultats des mesures de la résistance en compression (Rc) sont rapportés dans le tableau 7 suivant.

| | | Mortier 1 (réf.) | Mortier 16 | Mortier 17 | Mortier 18 | Mortier 19 | Mortier 20 | Mortier 21 |
|---|---|---|---|---|---|---|---|---|
| **Indice de performance (en %)** | **2 jours** | 43.9 | 31.5 | 30.8 | 33.7 | 33.4 | 33.5 | 24.7 |
| | **7 jours** | 53.6 | 45.9 | 43.7 | 46.4 | 47.5 | 47.5 | 46.0 |
| | **28 jours** | 61.8 | 54.6 | 52.5 | 56.2 | 62.0 | 64.7 | 56.0 |
| **Indice de performance (en %)** | **2 jours** | - | 67.6 | 70.2 | 76.8 | 76.1 | 76.3 | 56.3 |
| | **7 jours** | - | 82.1 | 81.5 | 86.6 | 88.6 | 88.6 | 85.8 |
| | **28 jours** | - | 90.2 | 85.0 | 90.9 | 100.3 | 104.7 | 90.6 |

*Tableau 7 – Résistances en compression*

Il apparait que les mortiers préparés à partir d'un mélange binaire 75% ciment Portland/25% argile calcinée en calcinateur flash (mortiers 17 à 20) possèdent une résistance mécanique à 28 jours comparable voire supérieure (selon la température de calcination) à celle du mortier préparé à partir du seul ciment Portland (mortier 1) ou à partir d'un mélange ciment Portland/argile calcinée commerciale.

Les résultats obtenus pour le mortier préparé à partir d'un mélange ternaire ciment Portland/(argile calcinée en calcinateur flash + filler calcaire) (mortier 21) montrent qu'il est possible de réduire de 45% la quantité de ciment Portland utilisée avec moins de 10% de perte de résistance à la compression à 28 jours.

**Revendications**

1. Utilisation d'une argile comprenant :

   - moins de 25% de kaolinite ; et
   - au moins 20% de muscovite et/ou illite ;
   - le rapport en poids muscovite et/ou illite / kaolinite étant supérieur à 1 ;

   pour la préparation d'un matériau pouzzolanique.

2. Utilisation selon la revendication 1, **caractérisée en ce que** l'argile contient moins de 22% de kaolinite.

3. Utilisation selon la revendication 2, **caractérisée en ce que** l'argile contient moins de 20% de kaolinite.

4. Utilisation selon l'une quelconque des revendications 1 à 3, **caractérisée en ce que** l'argile contient au moins 1% de kaolinite.

5. Utilisation selon l'une quelconque des revendications 1 à 4, **caractérisée en ce que** l'argile contient au moins 25% de muscovite et/ou illite.

6. Utilisation selon la revendication 5, **caractérisée en ce que** l'argile contient de 25% à 50% de muscovite et/ou illite.

**7.** Utilisation selon l'une quelconque des revendications 1 à 6, **caractérisée en ce que** le rapport en poids muscovite et/ou illite / kaolinite dans l'argile utilisée est supérieur à 2.

**8.** Utilisation selon l'une quelconque des revendications 1 à 7, **caractérisée en ce que** l'argile contient en outre au moins 1% de calcite.

**9.** Utilisation selon l'une quelconque des revendications 1 à 8, **caractérisée en ce que** l'argile contient en outre une phase amorphe contenant de la silice, de l'alumine et/ou du calcium.

**10.** Utilisation selon l'une quelconque des revendications 1 à 9, **caractérisée en ce que** l'argile contient en outre de la chlorite, du quartz, de la dolomite, de la microcline, de l'hématite et/ou de la smectite.

**11.** Procédé de préparation d'un matériau pouzzolanique comprenant les étapes suivantes

- éventuel séchage puis éventuel broyage de l'argile selon l'une des revendications 1 à 10 ;
- calcination du matériau obtenu à une température comprise entre 650°C et 900°C; et
- éventuelle désagglomération de l'argile calcinée obtenue jusqu'à atteindre un diamètre médian de 10 $\mu$m à 20 $\mu$m.

**Patentansprüche**

**1.** Verwendung eines Tons, umfassend:

- weniger als 25 % Kaolinit; und
- mindestens 20 % Muskovit und/oder Illit;
- wobei das Gewichtsverhältnis von Muskovit und/oder Illit zu Kaolinit größer als 1 ist;

zum Herstellen eines puzzolanischen Materials.

**2.** Verwendung nach Anspruch 1, **dadurch gekennzeichnet, dass** der Ton weniger als 22 % Kaolinit enthält.

**3.** Verwendung nach Anspruch 2, **dadurch gekennzeichnet, dass** der Ton weniger als 20 % Kaolinit enthält.

**4.** Verwendung nach einem der Ansprüche 1 bis 3, **dadurch gekennzeichnet, dass** der Ton mindestens 1 % Kaolinit enthält.

**5.** Verwendung nach einem der Ansprüche 1 bis 4, **dadurch gekennzeichnet, dass** der Ton mindestens 25 % Muskovit und/oder Illit enthält.

**6.** Verwendung nach Anspruch 5, **dadurch gekennzeichnet, dass** der Ton 25 % bis 50 % Muskovit und/oder Illit enthält.

**7.** Verwendung nach einem der Ansprüche 1 bis 6, **dadurch gekennzeichnet, dass** das Gewichtsverhältnis von Muskovit und/oder Illit zu Kaolinit im verwendeten Ton größer als 2 ist.

**8.** Verwendung nach einem der Ansprüche 1 bis 7, **dadurch gekennzeichnet, dass** der Ton ferner mindestens 1 % Calcit enthält.

**9.** Verwendung nach einem der Ansprüche 1 bis 8, **dadurch gekennzeichnet, dass** der Ton ferner eine amorphe Phase enthält, die Siliciumdioxid, Aluminiumoxid und/oder Calcium enthält.

**10.** Verwendung nach einem der Ansprüche 1 bis 9, **dadurch gekennzeichnet, dass** der Ton ferner Chlorit, Quarz, Dolomit, Mikroklin, Hämatit und/oder Smektit enthält.

**11.** Verfahren zum Herstellen eines puzzolanischen Materials, umfassend die folgendes Schritte

- gegebenenfalls Trocknen und dann gegebenenfalls Zermahlen des Tons nach einem der Ansprüche 1 bis 10;
- Kalzinieren des erhaltenen Materials bei einer Temperatur zwischen 650 °C bis 900 °C; und

- gegebenenfalls Deagglomerieren des erhaltenen kalzinierten Tons, bis ein mittlerer Durchmesser von 10 μm bis 20 μm erreicht ist.

**Claims**

1. Use of a clay comprising:

   - less than 25% of kaolinite; and
   - at least 20% of muscovite and/or illite;
   - the muscovite and/or illite / kaolinite weight ratio being greater than 1; for preparing a pozzolanic material.

2. The use according to claim 1, **characterized in that** the clay contains less than 22% of kaolinite.

3. The use according to claim 2, **characterized in that** the clay contains less than 20% of kaolinite.

4. The use according to any of claims 1 to 3, **characterized in that** the clay contains at least 1% of kaolinite.

5. The use according to any of claims 1 to 4, **characterized in that** the clay contains less than 25% of muscovite and/or illite.

6. The use according to claim 5, **characterized in that** the clay contains 25% to 50% of muscovite and/or illite.

7. The use according to any of claims 1 to 6, **characterized in that** the muscovite and/or illite / kaolinite weight ratio in the clay used is greater than 2.

8. The use according to any of claims 1 to 7, **characterized in that** the clay further contains at least 1% of calcite.

9. The use according to any of claims 1 to 8, **characterized in that** the clay further contains an amorphous phase containing silica, alumina and/or calcium.

10. The use according to any of claims 1 to 9, **characterized in that** the clay further contains chlorite, quartz, dolomite, microcline, hematite and/or smectite.

11. A method for preparing a pozzolanic material comprising the following steps

    - possible drying then possible grinding of the clay according to any of claims 1 to 10;
    - calcination of the obtained material at a temperature comprised between 650°C and 900°C; and
    - possible deagglomeration of the obtained calcined clay until reaching a median diameter of 10 μm to 20 μm.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2253600 A

**Littérature non-brevet citée dans la description**

- **KAREN L.** Options for the future of cement. *The Indian Concrète Journal,* Juillet 2014, vol. 88 (7), 11-21
- **F. AVET.** Investigation of the calcined kaolinite content on the hydration of Limestone Calcined Clay Cement (LC3). *Cement and Concrete Research,* 2018, vol. 107, 124-135
- **BUDAK et al.** Chemical characterization of Cretan clays for the design of restoration mortars. *Microchimica Acta,* 2008, vol. 162 (3-4), 325-331
- **FERNANDEZ et al.** The origin of the pozzolanic activity of calcined clay minerais: A comparison between kaolinite, illite and montmorillonite. *Cement & Concrète Research,* 2011, vol. 41 (1), 113-122
- **HE.** Thermal stability and pozzolanic acitivity of calcined illite. *Applied Clay Science,* Février 1995, vol. 9, 337-354